# EUROPÄISCHE PATENTSCHRIFT

(11) **EP 0 770 674 B1**
(45) Veröffentlichungstag und Bekanntmachung des Hinweises auf die Patenterteilung: **04.12.2002**
(21) Anmeldenummer: 96115181.8
(22) Anmeldetag: 20.09.1996
(51) Int. Cl.: C12C 7/17

(54) **Verfahren und Vorrichtung zum Abläutern der Nachgüsse bei der Bierherstellung**
Method and apparatus for the clarification of the last drops of wort in beer production
Procédé et appareil pour la clarification des dernières gouttes du moût lors de la fabrication de la bière

(30) Priorität: 20.10.1995 DE 19539180
(43) Veröffentlichungstag der Anmeldung: 02.05.1997
(73) Patentinhaber: Anton Steinecker Maschinenfabrik GmbH, 85356 Freising-Attaching (DE)
(72) Erfinder: Stippler, Kurt, Dr.-Ing., 85414 Marzling (DE); Wasmuht, Klaus, 91792 Ellingen (DE)
(74) Vertreter: Grünecker, August, Dipl.-Ing.

(56) Entgegenhaltungen:
- EP-A- 0 362 793
- DE-A- 1 517 840
- DE-A- 3 540 319
- DE-A- 3 910 149
- DE-A- 4 036 078
- DE-U- 8 900 649
- GB-A- 1 115 461
- US-A- 3 882 897

## Beschreibung

Die Erfindung betrifft ein Verfahren zum Abläutern der Nachgüsse bei der Bierherstellung in einem Läuterbottich, der mit einer rotierbaren Aufhackvorrichtung und einem damit verbundenen Verteiler zum Einbringen von Glattwasser und/oder Trübwürze und/oder Trub versehen ist, wobei die in den Trebern nach der Vorderwürzegewinnung verbliebene Würze mittels von oben auf die Treber aufgebrachtem heißem Wasser ausgewaschen wird.

In Läuterbottichen, die mit einer rotierbaren Aufhackvorrichtung und einem Verteiler zum Einbringen von Glattwasser und/oder Trübwürze und/oder Trub bei der Vorderwürzegewinnüng ausgestattet sind, ist es bekannt, zum Abläutern der Nachgüsse das dafür erforderliche Heißwasser mittels Anschwänzapparaten oder mittels Düsensystemen auf die Treber aufzubringen. Bei einem von der Anmelderin bisher praktizierten, den Stand der Technik bildenden System befinden sich dabei im oberen Teil des Läuterbottichs Anschwänzringe, die am Umfang verteilt mit Düsenöffnungen versehen sind, so daß über den Umfang des Läuterbottichs das Anschwänzwasser von oben auf die Treber aufgebracht werden kann.

Die Anbringung der Anschwänzringe ist jedoch mit entsprechendem konstruktiven und damit einhergehenden finanziellen Aufwand verbunden.

Aufgabe der Erfindung ist es daher, ein Verfahren und eine Vorrichtung anzugeben, die konstruktiv einfacher sind und damit zu einer kostengünstigeren Lösung führen.

Zur Lösung dieser Aufgabe ist erfindungsgemäß vorgesehen, daß das heiße Wasser für die Nachgüsse über den Verteiler eingebracht wird.

Es hat sich herausgestellt, daß innerhalb der Analysengenauigkeit kein Unterschied im Anschwänzeffekt bzw. im Auslaugen der Treber festgestellt werden kann, wenn das Anschwänzwasser über die bereits bei bekannten Läuterbottichen vorhandenen Verteiler auf der Aufhackvorrichtung eingebracht wird. Die Verwendung der bereits vorhandenen Verteiler führt zu einer wesentlich kostengünstigeren Lösung ohne qualitative Einbußen.

Dabei kann es vorteilhaft sein, wenn beim Einbringen des heißen Wassers die Aufhackmaschine und der Verteiler rotierend angetrieben werden. Durch das rotierende Antreiben der Aufhackmaschine wird das Anschwänzwasser dann gleichmäßig über den Umfang verteilt aufgebracht, so daß auch bei sehr kleinen Durchflußmengen, also beim langsamen Einlaufenlassen des Anschwänzwassers, eine sehr gleichmäßige Verteilung über der Treberschicht erreicht wird. Dabei kann die Aufhackmaschine in einer Position angehoben sein, in der die Aufhackmesser nicht im Treberkuchen arbeiten, es kann allerdings auch vorgesehen sein, die Aufhackmaschine in einer Position zu betreiben, in der sie zumindest teilweise im Treberkuchen wirkt, so daß das aufgebrachte Anschwänzwasser unmittelbar in den Treberkuchen eingemischt wird.

Bei einem Läuterbottich zur Durchführung des Verfahrens mit einer Aufhackvorrichtung und einem damit verbundenen Verteiler zum Einbringen von Glattwasser und/oder Trübwürze und/oder Trub über zu dem Verteiler führenden Leitungen ist erfindungsgemäß vorgesehen, daß an mindestens einer Zuleitung zu dem Verteiler eine Heißwasserleitung angeschlossen ist. Über diese Heißwasserleitung kann dann beim Anschwänzen das Anschwänzwasser zugeführt und mit dem Verteiler verteilt werden.

In der Heißwasserleitung befindet sich vorzugsweise ein Regelventil zur Regelung der Durchflußmenge mit einer Rate, wie sie für den Anschwänzprozeß geeignet ist. Auch kann in der Heißwasserleitung eine Temperaturregelvorrichtung angeordnet sein, damit die Temperatur des Heißwassers eingestellt werden kann. Üblicherweise wird beim Anschwänzen eine Wassertemperatur zwischen 75 und 80° benötigt.

Vorteilhaft ist es, wenn der Verteiler mehrere Zweige aufweist, die mit ihren Enden gegen den Boden des Läuterbottichs gerichtet sind. Dies führt zu einer weiter verbesserten Verteilung des Heißwassers.

Zudem ist es vorteilhaft, wenn an den Enden dieser Zweige Prallplatten angeordnet sind, die das einströmende Wasser umleiten und ein direktes Auftreffen des Wasserstrahles auf den Treberkuchen verhindern.

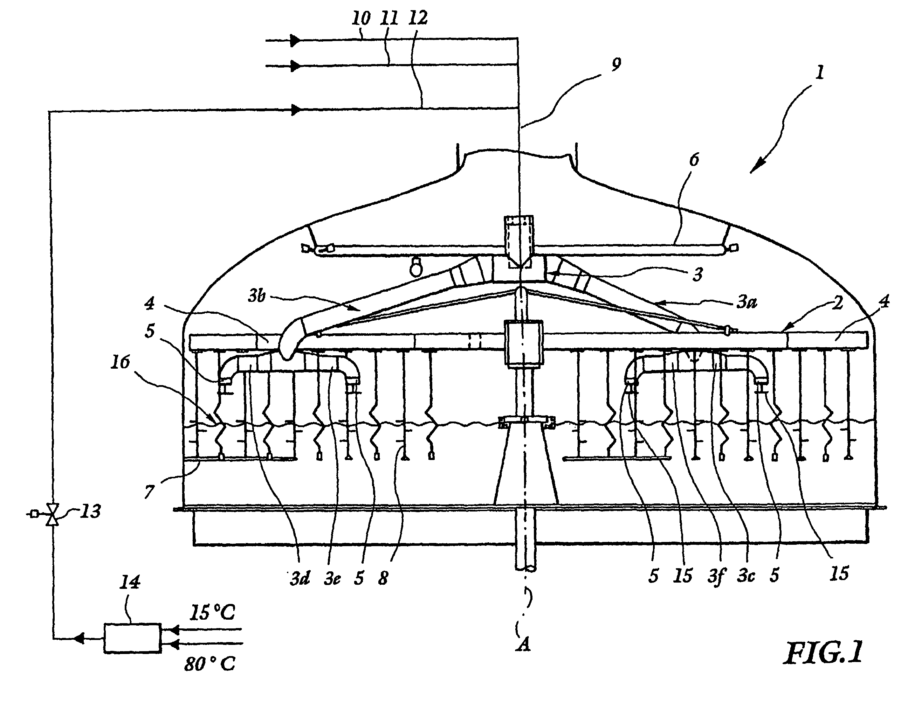

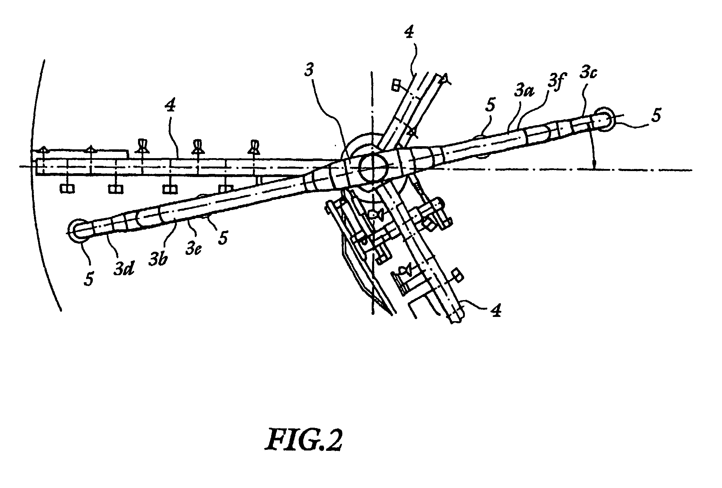

Die Erfindung wird im folgenden anhand des in den Figuren 1 und 2 dargestellten Ausführungsbeispiels weiter erläutert und beschrieben.
- Die Figur 1: zeigt eine schematische Darstellung eines Läu terbottichs im Querschnitt nach der Erfindung.
- Die Figur 2: zeigt eine Draufsicht des in Figur 1 gezeigten Aufbaus.

In der Figur 1 ist ein Läuterbottich dargestellt, der insgesamt mit 1 bezeichnet ist. Der Läuterbottich ist kreisrund ausgeführt und enthält in seinem Inneren eine bekannte Aufhackvorrichtung 2. Die Aufhackvorrichtung 2 ist um die zentrale Achse A des Läuterbottichs rotierbar antreibbar und weist von der Achse nach außen führende Balken 4 auf, an denen Aufhackmesser 8 und das Austreberscheid 7 angeordnet sind. Die Höhenlage der Aufhackvorrichtung im Läuterbottich 1 kann verändert werden, so daß die Aufhackmesser 8 in unterschiedlichen Tiefen im auf dem Boden sich absetzenden, in der Figur nicht gezeigten Treberkuchen arbeiten können. Das Aufhackscheid 7 kann zum Austrebern abgesenkt werden, ansonsten befindet es sich in einer oberen unwirksamen Stellung. Der Läuterbottich ist bis zu einem Füllstand 16 aufgefüllt.

Diese Grundkonstruktion eines solchen Läuterbottichs mit Aufhackvorrichtung ist bekannt. Es kann hierzu z.B. auf das deutsche Gebrauchsmuster G 86 29 841 verwiesen werden.

Mitdrehend mit den Balken 4 der Aufhackvorrichtung 2 ist der Verteiler 3 gelagert, der im gezeigten Ausführungsbeispiel aus mehreren Zweigen 3a bis 3f besteht, die in unterschiedlichen Radialabständen zur Achse A in den Düsen 5 münden. An die zu dem Verteiler 3 führende Zuleitung 9 ist eine Trubund/oder Glattwasserleitung 11 sowie eine Trübwürzeleitung 10 angeschlossen. Außerdem ist an die Zuleitung 9 erfindungsgemäß eine Heißwasserleitung 12 angeschlossen, über die Heißwasser, das mit einer geeigneten Temperatur in der Mischvorrichtung 14 erzeugt werden kann, ebenfalls dem Verteiler 3 zugeführt werden kann.

Am Ende der Zweige 3c bis 3f sind Prallplatten 15 unter den Düsen 5 angeordnet, die auftreffendes Heißwasser umleiten und so für eine verbesserte Verteilung sorgen und auch ein direktes Auftreffen des Wasserstrahles auf den Treberkuchen verhindern.

Die ebenfalls noch im Läuterbottich dargestellte Vorrichtung 6 wird für den Wasservorlauf und für Reinigungszwecke eingesetzt.

In der Draufsicht der Anordnung in Figur 2 ist deutlich zu erkennen, daß bei diesem Ausführungsbeispiel die Aufhackvorrichtung 2 drei Balken 4 umfaßt, die im Winkel von 120° zueinander angeordnet sind. Der Verteiler 3 ist versetzt dazu angeordnet, damit das Heißwasser ungehindert einfließen kann. Verteiler 3 und Balken 4 sind untereinander verbunden und drehbar gelagert. Man sieht in Figur 2, daß die verschiedenen Düsen an den Enden der Zweige 3c bis 3f verschiedene radiale Abstände zur Achse haben.

Mit dem so konstruierten Läuterbottich kann nun wie folgt gearbeitet werden:

Nach dem Einpumpen und Einlagern der Maische in bekannter Weise bildet sich auf dem Boden des Läuterbottichs der Treberkuchen aus, der im wesentlichen aus den in der Maische enthaltenen Spelzen und Hülsen besteht, die sich aus der Flüssigkeit ablagern. Während dieses Absetzprozesses befindet sich unter dem ebenfalls nicht dargestellten Senkboden des Läuterbottichs ein trübes Gemisch aus Wasser, Würze und Bodenteig, das durch das sogen. "Vorschießenlassen" der Würze entfernt wird. Die bei diesem Vorgang anfallende Trübwürze kann über die Trübwürzeleitung 10 zur Zuleitung 9 und über den Verteiler 3 wieder in den Läuterbottich 1 zurückgeführt werden.

Nach dem Abläutern der Vorderwürze erfolgt das Abläutern der Nachgüsse. Die nach dem Abläutern in den Trebern verbliebene Würze, die teils an der Oberfläche der Treberteilchen haftet, teils durch Quellung und Porosität im Inneren festgehalten wird, muß durch heißes Wasser ausgewaschen werden. Erfindungsgemäß wird das für diesen Vorgang benötigte heiße Wasser ebenfalls durch Anschluß an die Zuleitung 9 über den Verteiler 3 mit seinen Zweigen 3a bis 3f in den Läuterbottich eingebracht. Dabei kann die Aufhackvorrichtung 2 in Rotation versetzt werden, so daß sich der Verteiler 3 mit seinen Zweigen 3a bis 3f zusammen mit der Aufhackvorrichtung dreht und dabei das heiße Wasser gleichmäßig in unterschiedlichen Radialabständen von der Achse A über die Düsen 5 einbringt.

Eine separate, im Stand der Technik erforderliche Anschwänzvorrichtung im oberen Teil des Läuterbottichs 1 in Form von Anschwänzringen mit daran am Umfang verteilten Düsen ist deshalb nicht mehr erforderlich. Um das Anschwänzen mit den richtigen Heißwassertemperaturen und Heißwassermengen durchführen zu können, kann am Regelventil 13 die Heißwassermenge und an der Mischvorrichtung 14 die Temperatur des Heißwassers eingestellt werden.

Bei Versuchen wurde festgestellt, daß innerhalb der Analysengenauigkeit kein Unterschied im Anschwänzeffekt bzw. im Auslaugen der Treber festzustellen ist. Läuterzeiten, Trübungen, Arbeitsweise der Aufhackmaschine führen insgesamt zu den gleichen Ergebnissen, als wenn das Anschwänzwasser über eine separate Anschwänzvorrichtung eingebracht wird. Mit der Erfindung kann also unter Erzielung der gleichen Ergebnisse mit weniger konstruktivem und daher geringerem Kostenaufwand gearbeitet werden.

## Patentansprüche

1. Verfahren zum Abläutern der Nachgüsse bei der Bierherstellung in einem Läuterbottich, der mit einer rotierbaren, höhenveränderlichen und mit Aufhackmessern (8) versehenen Aufhackvorrichtung (2) und einem damit verbundenen Verteiler (3) zum Einbringen von Glattwasser und/oder Trübwürze und/oder Trub versehen ist, wobei die in den Trebem nach der Vorderwürzegewinnung verbliebene Würze mittels von oben auf die Treber aufgebrachtem heißem Wasser ausgewaschen wird, wobei
das heiße Wasser für die Nachgüsse über den Verteiler (3) eingebracht wird.

2. Verfahren nach Anspruch 1,
**dadurch gekennzeichnet, dass**
beim Einbringen des heißen Wassers die Aufhackvorrichtung (2) rotierend angetrieben wird.

3. Verfahren nach Anspruch 2,
**dadurch gekennzeichnet, dass**
beim Einbringen des heißen Wassers die Aufhackvorrichtung (2) in einer nicht im Treberkuchen arbeitenden Höhenlage rotierend angetrieben wird.

4. Läuterbottich zur Durchführung des Verfahrens nach Anspruch 1, mit einer
rotierbaren, höhenveränderlichen Aufhackvorrichtung (2), die mit Aufhackmessem (8) versehen ist, und mit einem mit der Aufhackvorrichtung (2) verbundenen, drehbaren Verteiler (3) zum Einbringen von Glattwasser und/oder Trübwürze und/oder Trub über zu dem Verteiler führende Zuleitungen (9, 10, 11), wobei
an mindestens eine Zuleitung (9, 10, 11) zu dem Verteiler (3) eine Heißwasserleitung (12) angeschlossen ist.

5. Läuterbottich nach Anspruch 4,
**dadurch gekennzeichnet, dass**
in der Heißwasserleitung (12) ein Regelventil (13) zur Durchflussmengenregelung angeordnet ist.

6. Läuterbottich nach Anspruch 4 oder 5,
**dadurch gekennzeichnet, dass**
in der Heißwasserleitung (12) eine Mischvorrichtung zur Temperaturregelung des heißen Wassers angeordnet ist.

7. Läuterbottich nach einem der Ansprüche 4 bis 6,
**dadurch gekennzeichnet, dass**
der Verteiler (3) mehrere Zweige (3a, 3b, 3c, 3d, 3e, 3f) umfasst, die mit ihren Enden gegen den Boden des Läuterbottiches hin gerichtet sind.

8. Läuterbottich nach Anspruch 7,
**dadurch gekennzeichnet, dass**
an den Enden Prallplatten (15) zum Verteilen des Heißwassers angeordnet sind.

## Claims

1. A method of lautering second worts or spargings during brewing in a lauter tun that is provided with a rotatable, vertically adjustable raking device (2) equipped with raking knives (8), and with a distributor (3) connected thereto for introducing last runnings and/or first worts and/or sludge, the wort which remains in the spent grains after first wort recovery being washed out by means of hot water that is applied from above onto the spent grains, wherein the hot water for the second worts is introduced via said distributor (3).

2. A method according to claim 1, **characterized in that** said raking device (2) is rotatingly driven during introduction of said hot water.

3. A method according to claim 2, **characterized in that** upon introduction of said hot water said raking device (2) is rotatingly driven at a level where it does not operate in the spent-grains cake.

4. A lauter tun for performing the method according to claim 1, comprising a rotatable, vertically adjustable raking device (2) equipped with raking knives (8), and a rotatable distributor (3) connected to said raking device (2) for introducing last runnings and/or first worts and/or sludge via supply ducts (9, 10, 11) leading to said distributor, wherein a hot water duct (12) is connected to at least one supply duct (9, 10, 11) leading to said distributor (3).

5. A lauter tun according to claim 4, **characterized in that** a control valve (13) for controlling the flow rate is arranged in said hot water duct (12).

6. A lauter tun according to claim 4 or 5, **characterized in that** a mixing device is arranged in said hot-water duct (12) for controlling the temperature of said hot water.

7. A lauter tun according to any of claims 4 to 6, **characterized in that** said distributor (3) comprises a plurality of branches (3a, 3b, 3c, 3d, 3e, 3f) which are directed with their ends towards the bottom of said lauter tun.

8. A lauter tun according to claim 7, **characterized in that** baffle plates (15) are arranged at said ends for distributing hot water.

## Revendications

1. Procédé pour la clarification des dernières gouttes du moût lors de la fabrication de la bière dans une cuve de clarification, qui est munie d'une piocheuse (2) rotative, modifiable en hauteur et pourvue de lames de pioche (8), et d'un répartiteur (3) relié à cette dernière pour l'introduction de dernières eaux de lavage et/ou de moût trouble et/ou de dépôt, le moût subsistant dans les drêches après l'obtention du premier moût étant lavé au moyen d'eau chaude répandue à partir du haut sur les drêches, l'eau chaude pour le moût secondaire étant introduite par l'intermédiaire du répartiteur (3).

2. Procédé suivant la revendication 1,
**caractérisé en ce que**
la piocheuse (2) est entraînée en rotation lors de l'introduction de l'eau chaude.

3. Procédé suivant la revendication 2,
**caractérisé en ce que,**
lors de l'introduction de l'eau chaude, la piocheuse (2) est entraînée en rotation dans une position en hauteur ne travaillant pas dans le gâteau de drêches.

4. Cuve de clarification pour la mise en oeuvre du procédé suivant la revendication 1, comprenant une piocheuse (2) rotative modifiable en hauteur, munie de lames de pioche (8), et un répartiteur rotatif (3), relié à la piocheuse (2), pour l'introduction de dernières eaux de lavage et/ou de moût trouble et/ou de dépôt par l'intermédiaire de conduites d'arrivée (9, 10, 11) menant au répartiteur, une conduite d'eau chaude (12) étant raccordée à au moins une conduite d'arrivée (9, 10, 11) au répartiteur (3).

5. Cuve de clarification suivant la revendication 4,
**caractérisée en ce que**
une vanne de régulation (13) pour la régulation du débit est disposée dans la conduite d'eau chaude (12).

6. Cuve de clarification suivant l'une des revendications 4 et 5,
**caractérisée en ce que**
un mélangeur pour réguler 1a température de l'eau chaude est disposé dans la conduite d'eau chaude (12).

7. Cuve de clarification suivant l'une des revendications 4 à 6,
**caractérisée en ce que**
le répartiteur (3) comprend plusieurs branches (3a, 3b, 3c, 3d, 3e, 3f), qui sont dirigées par leurs extrémités en direction du fond de la cuve de clarification.

8. Cuve de clarification suivant la revendication 7,
**caractérisée en ce que**
des chicanes (15) sont disposées sur les extrémités pour la répartition de l'eau chaude.
